(19) Europäisches Patentamt
European Patent Office
Office européen des brevets

(11) Publication number: 0 291 758 B1

# (12) EUROPEAN PATENT SPECIFICATION

(45) Date of publication of patent specification: 15.07.92

(51) Int. Cl.[5]: C09D 11/10, C09D 167/02, C08G 63/68

(21) Application number: 88107057.7

(22) Date of filing: 03.05.88

## (54) Ink compositions and preparation.

(30) Priority: 18.05.87 US 50645

(43) Date of publication of application: 23.11.88 Bulletin 88/47

(45) Publication of the grant of the patent: 15.07.92 Bulletin 92/29

(84) Designated Contracting States: DE FR GB IT

(56) References cited:
FR-A- 2 311 820
US-A- 3 734 874
US-A- 4 233 196

(73) Proprietor: **EASTMAN KODAK COMPANY (a New Jersey corporation)**
**343 State Street**
**Rochester New York 14650(US)**

(72) Inventor: **Stockl, Hazel Rebecca Reid EASTMAN KODAK COMPANY**
**Patent Department 343 State Street**
**Rochester New York 14650(US)**
Inventor: **Barton, Kenneth Ray c/o EASTMAN KODAK COMPANY**
**Patent Department 343 State Street**
**Rochester New York 14650(US)**
Inventor: **Caldwell, Melvin Arthur c/o EASTMAN KODAK COMPANY**
**Patent Department 343 State Street**
**Rochester New York 14650(US)**

(74) Representative: **Parent, Yves et al**
**Kodak-Pathé Département Brevets et Licences Centre de Recherches et de Technologie Zone Industrielle**
**F-71102 Chalon-sur-Saône Cédex(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

This invention concerns pigmented, aqueous inks and their substantially non- or semi-aqueous concentrates, containing partially or essentially completely hydrolyzed polyvinyl acetate, hereinafter termed polyvinyl alcohol, and having greatly improved printing properties such as flow-out, print smoothness, transparency, gloss, color development, and the like, particularly noticeable with highly colored pigments, wherein the pigment carrier or binder comprises water-dispersible or dissipatible polyester material. These inks find special utility for letter press, intaglio, gravure, flexographic and other printing processes adaptable to the use of aqueous inks. The term "ink" is used herein in its broad sense as including the use thereof for coatings in all forms such as letters, patterns and coatings without design.

The printing industry in general finds many applications for the use of water-based inks and overprint varnishes as a means of meeting increasingly stringent solvent effluent regulations. Present day water-based inks often fail to satisfy these regulations as well as the necessary printability, stability, and performance properties required for commercial inks. For example, the various ethyleneacrylic acid copolymer salts of U.S. Patent 3,607,813, the disclosure of which is incorporated herein by reference (for the printing process descriptions therein), in addition to requiring complex polymer and ink preparations, lack in performance on certain substrates. Other such aqueous or semi-aqueous systems proposed for printing inks contain polymers such as styrene-butadiene or polyacrylate latex systems but these systems also have serious drawbacks including being non-water dispersible after short drying periods which complicates equipment clean up. Other water soluble or dispersible polymers suggested for printing ink use are discussed in U.S. Patent 4,072,644.

The present invention provides marked improvements in the preparation, stability, and performance of water-based inks for printing and coating, particularly in regard to flow-out, viscosity modification, color development, reduction in surface tension, pick-up on the printing rollers or other mechanisms, and greatly improved adhesion on certain substrates such as aluminum. These improvements are particularly dramatic in comparison to the effects of known additives such as hydroxyethylcellulose and the like on aqueous inks.

### Description of the Invention

The invention is defined as a composition useful as a printing ink or useful for the preparation of a printing ink, comprising a substantially homogeneous system of the components:

(1) from 4 to 80 weight % of polymeric material of at least one linear water-dissipatable polymer having carbonyloxy linking groups in the linear molecular structure wherein up to 80% of the linking groups may be carbonylamido linking groups, the polymer having an inherent viscosity of from 0.28 to 0.38, measured in a 60/40 parts by weight solution of phenol/tetrachloroethane at 25 °C and at a concentration of 0.25 gram of polymer in 100 ml of the solvent, the polymer containing substantially equimolar proportions of acid equivalents (100 mole percent) to hydroxy and amino equivalents (100 mole percent), the polymer comprising the reaction products of (a), (b), (c), and (d) from the following reactants or ester forming or ester-amide forming derivatives thereof;

(a) an acid component (moiety) of from 75 to 84 mole % isophthalic acid and conversely from 25 to 16 mole % 5-sodiosulfoisophthalic acid, and (b) a glycol component (moiety) of from 45 to 60 mole % diethylene glycol and conversely from 55 to 40 mole % 1,4-cyclohexanedimethanol or ethylene glycol or mixtures thereof,

(2) from 1 to 60 weight % pigment material;

(3) from substantially none to 90 weight % water; and

(4) from 0.005 to 30.0 weight % polyvinyl alcohol (PVA). With regard to this polymeric material, the term "moiety" as used herein designates the residual portion of the reactant acid or glycol which actually enters into or onto the polymer chain during the condensation or polycondensation reaction.

In the above polymeric material it is preferred that very minor, e.g., less than 10 mol % based on all reactants, of reactant (d) is employed, that at least 70 mol % of reactant (c) is glycol, and that at least 70 mol % of all the hydroxy equivalents is present in the glycol.

The polyvinyl alcohols (PVA) useful in the present invention are those of partially hydrolyzed (from 85% to 95% hydrolyzed) polyvinylacetate which have medium to high viscosities (CPS, determined on 4% aqueous solutions at 20 °C. by ASTM D-2196) of from 15 to 55 CPS, preferably from 37 to 52 CPS. The preparation and properties of such PVA materials are well known in the literature as described, for example, in Kirk-Othmer, Concise Encyclopedia of Chemical Technology, 3rd Edition, 1984, pp. 848-865, incorporated herein by reference. The more useful concentration range of the PVA in the inks is from 0.01 to 10.0, and the more preferred concentrations range from 0.05 to 3.5 wt. %, and most preferably from 0.2 to

2.0 wt. %.

The pigments useful in the present invention, in addition to those specifically identified below, include those described in NPIRI Raw Materials Data, Vol. 4, Pigments, Copyright 1983. Conventional dispersing aids, biocides, defoamers and the like may be used in the present inks if desired for their known effects.

Further preferred embodiments of the invention are as follows:

(a) the inherent viscosity of the water-dissipatable polymeric material is from 0.28 to 0.38, the said acid component (moiety) comprises from 80 to 83 mole % isophthalic acid and conversely from 20 to 17 mole % 5-sodiosulfoisophthalic acid, and the said glycol component (moiety) comprises from 52 to 56 mole % diethylene glycol and conversely from 48 to 44 mole % 1,4-cyclohexane-dimethanol;

(b) the weight ratio of water to PVA in the press-ready ink is from 85 to 180;

(c) the pigment is one or a mixture of the following color index materials according to their generic names: C.I. Pigment Yellow 17; C.I. Pigment Blue 27; C.I. Pigment Red 49:2; C.I. Pigment Red 81:1; C.I. Pigment Red 81:3; C.I. Pigment Red 81:x; C.I. Pigment Yellow 83; C.I. Pigment Red 57:1; C.I. Pigment Red 49:1; C.I. Pigment Violet 23; C.I. Pigment Green 7; C.I. Pigment Blue 61: C.I. Pigment Red 48:1, C.I. Pigment Red 52:1; C.I. Pigment Violet 1; C.I. Pigment White 6; C.I. Pigment Blue 15; C.I. Pigment Yellow 12; C.I. Pigment Blue 56; C.I. Pigment Orange 5; C.I. Pigment Black 7; C.I. Pigment Yellow 14; C.I. Pigment Red 48:2; and C.I. Pigment Blue 15:3;

(d) the aqueous ink is coated or printed onto a substrate selected from metal foil, newsprint, bleached and unbleached Kraft paper, clay coated paper, glass, calendered paper, stainless paper, paper board, and films or other substrates of polyester, polycarbonate, cellulose ester, regenerated cellulose, poly-(vinylidene chloride), polyamide, polyolefin, or polystyrene; and

(e) the coating or print comprises any of the above compositions wherein a substantial portion of the initial metal cations of the water solubilizing sulfonate groups of the polymeric material has been replaced with an insolubilizing polyvalent metal cation, such as $Al^{+3}$, $Ca^{++}$, or the like as disclosed and in the manner described in U.S. Patent 4,145,469, the disclosure of which is incorporated herein by reference. As stated therein, generally, based on the weight of the polymeric material, 0.05% to about 2.0% by weight of the polyvalent metal cation is required for effective insolubilization.

The complete chemical definitions of the above C.I. pigments are given in the following table:

## Pigments

| Generic Name | C.A. Index/Chemical Name |
|---|---|
| C.I. Pigment Yellow 17 | Butanamide, 2,2'-[(3,3'-dichloro[1,1'-biphenyl]-4,4'-diyl)bis(azo)bis[N-(2-methoxyphenyl)-3-oxo- |
| C.I. Pigment Blue 27 | Ferrate (4-1), hexakis (cyano-C)-ammonium iron (3+)(1:1:1) |
| C.I. Pigment Red 49:2 | 1-Naphthalenesulfonic acid, 2-[(2-hydroxy-1-naphthalenyl)azo]-, calcium salt (2:1) |
| C.I. Pigment Red 81:1 | Benzoic acid, 2,-[6-ethyl-amino)-3-(ethylimino)-2,7-dimethyl-3H-xanthen-9-yl]-, ethyl ester, w/molybdenum tungsten hydroxide oxide phosphate |
| C.I. Pigment Red 81:3 | Benzoic acid, 2-[6-ethyl-amino)-3-ethylimino)-2,7-dimethyl-3H-xanthen-9-yl]-, ethyl ester, molybdate-silicate |
| C.I. Pigment Red 81:x | Benzoic acid, 2-[6-(ethyl-amino)-3-(ethylimino)-2,7-dimethyl-3H-xanthen-9-yl]-ethyl ester, molybdate-phosphate |

| | |
|---|---|
| C.I. Pigment Yellow 83 | Butanamide, 2,2'-[(3,3'-dichloro[1,1'-biphenyl]-4,4'-diyl)bis(azo)bis[N-(4-chloro-2,5-dimethoxy-phenyl)-3-oxo- |
| C.I. Pigment Red 57:1 | 2-Naphthalenecarboxylic acid, 3-hydroxy-4-[(4-methyl-2-sulfophenyl)azo]-, calcium salt (1:1) |
| C.I. Pigment Red 49:1 | 1-Naphthalenesulfonic acid, 2-[(2-hydroxy-1-naphthalenyl)azo]-, barium salt (2:1) |
| C.I. Pigment Violet 23 | Diindolo[3,3',2'm] triphenodioxazine, 8,18-dichloro-5,15-diethyl-5,15-dihydro- |
| C.I. Pigment Green 7 | C.I. Pigment Green 7 |
| C.I. Pigment Blue 61 | Benzenesulfonic acid, [[4-[[4-phenylamino)phenyl]-[4-(phenylimino)-2,5-cyclo-hexadien-1-ylidene]methyl]-phenyl]amino]- |
| C.I. Pigment Red 48:1 | 2-Naphthalenecarboxylic acid, 4-[(5-chloro-4-methyl-2-sulfophenyl)azo]-3-hydroxy-, barium salt (1:1) |
| C.I. Pigment Red 52:1 | 2-Naphthalenecarboxylic acid, 4-[(4-chloro-5-methyl-2-sulfophenyl)azo]-3-hydroxy-, calcium salt (1:1) |
| C.I. Pigment Violet 1 | Ethanaminium, N-[9-(2-carboxyphenyl)-6-(diethyl-amino)-3H-xanthen-3-ylidene]-N-ethyl-, molyb-datetungstatephosphate |
| C.I. Pigment White 6 | Titanium oxide ($TiO_2$) |

| | |
|---|---|
| C.I. Pigment Blue 15 | Copper, [29H, 31H-phthalocyaninato (2-)-$N^{29}$, $N^{30}$, $N^{31}$, $N^{32}$]-, (Sp-4-1)- |
| C.I. Pigment Yellow 12 | Butanamide, 2,2'-[(3,3'-dichloro[1,1'-biphenyl]-4,4'-diyl)bis(azo)]bis[3-oxo-N-phenyl- |
| C.I. Pigment Blue 56 | Benzenesulfonic acid, 2-methyl-4-[[4-[[4-[(3-methylphenyl)amino]phenyl]-[4-[(3-methylphenyl)-imino]-2,5-cyclohexa-dien-1-ylidene]methyl]-phenyl]amino]- |
| C.I. Pigment Orange 5 | 2-Naphthalenol, 1-[(2,4-dinitrophenyl)azo]- |
| C.I. Pigment Black 7 | Carbon black |
| C.I. Pigment Yellow 14 | Butanamide, 2,2'-[(3,3'-dichloro[1,1'-biphenyl]-4,4'-diyl)bis(azo)]bis-[N-(2-methylphenyl)-3-oxo- |
| C.I. Pigment Red 48:2 | 2-Naphthalenecarboxylic acid, 4-[(5-chloro-4-methyl-2-sulfophenyl)-azo]-3-hydroxy-, calcium salt (1:1) |
| C.I. Pigment Blue 15:3 | Copper, [29H, 31H-phthalocyaninato (2-)-$N^{29}$, $N^{30}$, $N^{31}$, $N^{32}$]-, (SP-4-1)- |

The inherent viscosities (I.V.) of the particular polyester materials useful herein range from about 0.1 to about 1.0 determined according to ASTM D2857-70 procedure, in a Wagner Viscometer of Lab Glass, Inc. of Vineland, New Jersey, having a 1/2 ml. capillary bulb, using a polymer concentration about 0.25% by weight in 60/40 by weight of phenol/tetrachloroethane. The procedure is carried out by heating the polymer/solvent system at 120 °C for 15 minutes, cooling the solution to 25 °C and measuring the time of flow at 25 °C. The I.V. is calculated from the equation

$$(n)\ {}^{25°C.}_{0.50\%} = \frac{\ln \frac{t_s}{t_o}}{C}$$

where:

(n) = inherent viscosity at 25 °C at a polymer concentration of 0.25 g/100 ml. of solvent;

ln = natural logarithm;

$t_s$ = sample flow time;

$t_0$ = solvent-blank flow time; and

C = concentration of polymer in grams per 100 ml. of solvent = 0.25.

The units of the inherent viscosity throughout this application are in deciliters/gram. It is noted that higher concentrations of polymer, e.g., 0.50 g of polymer/100 ml solvent may be employed for more precise I.V. determinations.

In general, the water-dissipatable polyester materials useful in the present invention are excellent film formers for water based printing inks. The polymers form stable dispersions in water and produce tough, flexible films on drying. Films will form at temperatures down to just above the freezing point of water. The polymers in dispersion form may be plasticized if necessary, for example, with certain water immiscible phthalate esters to high degrees of flexibility. Printing inks prepared from the present concentrates are readily further water reducible (diluted) and the finished or press-ready inks typically comprise in % by weight, from 55 to 90% water, preferably from 65 to 75% water, from 4 to 30% water-dissipatable polymer, preferably from 10 to 25% polymer, from 1 to 20% pigment, preferably from 8 to 15% pigment, and from 0.01 to 10.0% polyvinyl alcohol, preferably from 0.05 to 3.5% PVA. The inks dry rapidly upon printing, wet surfaces exceptionally well and have excellent adhesion to many plastic films and metal foil as well as to paper, glass, polyethylene and many other substrates. Both the 100% solids, water-dissipatable polymers and the corresponding aqueous dispersions thereof may be pigmented by conventional techniques, and the polyvinyl alcohol may be added prior to or during blending of the pigment with the 100% solids polymer or with its aqueous dispersion, or the PVA may be added to the pre-formed aqueous polymer-pigment dispersion by suitable mixing. The prints have moderate water resistance upon heating and may be post-treated to produce films with excellent resistance to water, for example, with an aqueous alum solution or the like cation. In this regard, the use of deionized water in the present invention is preferred in order to prevent premature ion exchange on ink insolubilization.

The aforedescribed water-dissipatible polyester material is prepared according to the polyester preparation technology described in U.S. Patents: 3,734,874; 3,779,993; and 4,233,196, the disclosures of which are incorporated herein by reference, and the use of the term "acid" in the above description and in the appended claims includes the various ester forming or condensable derivatives of the acid reactants such as the dimethyl esters thereof as employed in the preparations set out in these patents. Among the preferred sulfo-monomers are those wherein the sulfonate group is attached to an aromatic nucleus such as benzene, naphthalene, diphenyl, or the like, or wherein the nucleus is cycloaliphatic such as in 1,4-cyclohexanedicarboxylic acid.

Dispersal of the present polyester material in water may be done, for example, at preheated water temperature of about a 180° to about 200°F and the polymer added as pellets to the vortex under high shear stirring. A Cowles Dissolver, Waring Blender, or similar equipment may be used. Once the water is heated to temperature, additional heat input is not required. Depending upon the volume prepared, dispersal of the pellets by stirring should be complete within 15 to 30 minutes. Continued agitation with cooling may be desirable to prevent thickening at the surface due to water evaporation. Viscosities of the dispersions remain low up to nonvolatile levels of about 25-30%, but generally increase sharply above these levels. Viscosities of the dispersions will be influenced by the degree of polymer dispersion (fineness) obtained which is affected by the dispersing temperature, shear, and time.

The present concentrates and inks may also be prepared by milling, e.g., two-roll milling the finely comminuted, nonpolymer soluble pigment and PVA into the solid polyester material, and for the aqueous inks and semi-aqueous concentrates, thereafter dispersing the milled material in water in a manner generally similar to the procedure described in U.S. Patent 4,148,779 for solubilizing organic disperse textile dyes in polyester for subsequent dispersal in water. Dispersions can also be made by adding the pigment at high speed agitation to the polyester material previously dispersed in water and then grinding in a ball mill or sand mill to further reduce pigment size. The presence of PVA during this operation is preferred. The preferred pH of the present inks is from about 5.0 to about 7.5.

The viscosities of the inks may, of course, range widely, e.g., from 15 to 60 seconds as measured in a #2 Zahn cup according to ASTM D-4212-82. The higher viscosities, e.g. from 22 to 60 seconds and lower water levels, e.g. from 20 to 55% represent semi-aqueous concentrated forms of the present inks. In this regard, in order to reduce the viscosities of these inks when necessary for certain printing apparatus and processes, varying amounts of water are added. In this water addition, the ink viscosity may be reduced, for example, up to 60% of its original concentrate value, and the press-ready ink viscosity preferably ranges between 15 and 30 seconds in a number 2 Zahn cup.

The following examples will further illustrate practice of the invention.

Polyester Preparation

Example 1

A mixture of 79.5 g (0.41 mole) of dimethyl isophthalate, 26.6 g (0.09 mole) of dimethyl-5-sodiosulfoisophthalate, 54.1 g (0.51 mole) of diethylene glycol, 37.4 g (0.26 mole) of 1,4-cyclohexanedimethanol, 1.4 ml of a 1.0% (based on Ti) catalyst solution of titanium tetraisopropoxide, and 0.74 g (0.009 mole) of sodium acetate buffer is stirred and heated for two hours at 200-220 °C. The temperature is then raised to 275 °C and a vacuum fo 0.3 mm is applied. Heating and stirring is continued for 1 hour under these conditions. After cooling, the polymer obtained has an I.V. of 0.36 and is tough and rubbery and is dissipatable in hot water to the extent of about 25 weight percent to give a clear, slightly viscous solution. The composition of the acid moieties of this polyester material is analyzed to be 82 mole % isophthalic acid residue and 18 mole % 5-sodiosulfoisophthalic acid residue, and of the glycol moieties is analyzed to be 54 mole % diethylene glycol and 46 mole % 1,4-cyclohexanedimethanol.

In accordance with the present invention, inks prepared from the above polyester material and including the PVA and polymer insoluble pigments, particularly highly colored pigments, have been found to be unexpectedly superior over prior aqueous inks in one or more of such properties as flow-out or printability, pigment wetting, pigment stability, temperature stability (heat and freeze-thaw), non-settling for extended periods of time, nonpolluting with respect to odor and volatile organics, nonflocculating, wide viscosity range inks, adhesion to a variety of substrates, hardness, gloss, drying rate on substrates, resistance to grease, water and scuff, compatibility with other water-based inks, wet rub resistance, ink mileage characteristics (considerable water dilution allowable at the press), ink press stability in general, printability (clean, sharp transfer without "stringing or misting"), trapping, easy clean up, nonplugging of printing plates, flexibility, redispersibility or rewetting, crinkle resistance, high pigment loading, solvent resistance, alkali, chemical and detergent resistance, blocking resistance, lightfastness, toughness, substrate wetting, hold-out, dryrate, and no offset on the printing press (coating, e.g. on tension rollers).

Example 2

Two hundred grams of C.I. Pigment Blue 56 presscake (28.5% solids in water), 299 grams of the polymer of Example 1 (32% polymer in water) and 1.0 gram of Surfynol 104E (50% by weight solution of 2,4,7,9-tetramethyl-5-decyn-4,7-diol in ethylene glycol) were ground in an Eiger Mill operated at about 5,000 rpm for about 5 minutes at a viscosity of 15.5 seconds measured in a #2 Zahn Cup at 25 °C. according to ASTM D-4212-82. The grind has an NPIRI gauge of less than "2". Proofs of this ink prepared with a flexographic hand proofer employing a 180 line anilox roll on uncoated paper and high slip polyethylene (corona discharge treated) showed very poor printability and color development.

Example 3

The ink of Example 2 was modified by the addition thereto by hand stirring of 0.5% by weight (about 2.5 grams) based on the ink weight of PVA having a viscosity of 40-50 CPS as measured as a 4% aqueous solution at 20 °C, and a degree of hydrolysis of about 87-89%. Proofs of this ink prepared as in Example 2 gave vastly improved printability, smoothness, homogeneity and color development.

Example 4

The ink of Example 3 was printed onto high slip polyethylene one month after corona discharge treatment thereof and showed excellent printability, smoothness, homogeneity, color development and the like thereon.

Example 5

Several additional inks were made, each comprising 19.2 wt. % of the Example 1 polymer blended with 12 wt. % carbon black, PVA at concentrations of 0.15, 0.45, 0.75, 1.5, 2.25 and 3.0 wt. %, and the remainder being deionized water. These inks were coated onto aluminum foil, Mylar, polyethylene (corona discharge treated), newspaper, regular bond paper, PENOPAC, and Kraft paper with a flexographic hand proofer as in the previous examples and the coatings evaluated after drying at ambient temperatures. These experiments show that in general, the printability, adhesion and gloss of the coatings would improve as the

concentration of the PVA were increased from about 0.05 to about 3.5, and most noticeably would improve in the concentration range of from 0.2 to 2.0.

Example 6

An ink was made comprising 15.3 wt. % of the Example 1 polymer, 11.9 wt. % Red Pigment C.I. 49:2, 0.5 wt. % "PVA 523" (~95% hydrolyzed), and the remainder being deionized water. This ink was coated as above onto aluminum foil, polyethylene (corona discharge treated), Mylar and coated paper. The results were essentially as observed above in Example 5.

Example 7

Polyesters designated (A), (B), (C) and (D) were prepared essentially in accordance with Example 1 of the aforementioned U.S. Patent 4,233,196 from the following materials:

| (A) | g. moles |
|---|---|
| Dimethyl Isophthalate (IPA) | 0.415 |
| Dimethyl-5-Sodiosulfoisophthalate (SIP) | 0.085 |
| 1,4-Cyclohexanedimethanol (CHDM) | 0.520 |
| Carbowax 1000 (CW 1000) | 0.0273 |
| Sodium Acetate | 0.0085 |
| Irganox 1010 | 0.1 wt. % |

The Carbowax 1000 has the structure

$$H(OCH_2-CH_2)_nOH$$

wherein n is about 22. The polymer analyzed by NMR contains (in reacted form) about 83 mole % IPA, about 17 mole % SIP, about 94.5 mole % CHDM, and about 5.5 mole % of CW 1000, and has an I.V. of about 0.39. An ink was made comprising 12.3 wt. % of this polymer, 11.9 wt. % Red Pigment C.I. 49:2, 0.5 wt. % "PVA 523" (~ 95% hydrolyzed), and the remainder being deionized water. This ink was coated as above onto aluminum foil, polyethylene ) corona discharge treated), Mylar and coated paper. The results were essentially as observed above in Example 5.

| (B) | g. moles |
|---|---|
| Dimethyl Isophthalate | 0.328 |
| Dimethyl-5-Sodiosulfoisophthalate | 0.072 |
| 1,4-Cyclohexanedimethanol | 0.442 |
| Carbowax 400 (n=10) | 0.058 |
| Sodium Acetate | 0.0072 |

The polymer as analyzed by NMR contains (in reacted form) about 82 mole % IPA, about 18 mole % SIP, about 85.5 mole % CHDM and about 14.5 mole % CW 400, and has an I.V. of about 0.46.

| (C) | g. moles |
|---|---|
| Dimethyl Isophthalate | 0.41 |
| Dimethyl-5-Sodiosulfoisophthalate | 0.09 |
| 1,4-Cyclohexanedimethanol | 0.55 |
| Carbowax 4000 (n=90) | 0.0005 |
| Sodium Acetate | 0.009 |

The polymer as analyzed by NMR contains (in reacted form) about 82 mole % IPA, about 18 mole % SIP, about 99.9 mole % CHDM and about 0.1 mole % CW 4000, and has an I.V. of about 0.16.

| (D) | g. moles |
|---|---|
| Dimethyl Isophthalate | 0.205 |
| Dimethyl-5-Sodiosulfoisophthalate | 0.045 |
| Ethylene Glycol (EG) | 0.9638 |
| Carbowax 2000 (n=45) | 0.03625 |
| Sodium Acetate | 0.0045 |

The polymer as analyzed by NMR contains (in reacted form) about 82 mole % IPA, about 18 mole % SIP, about 85.5 mole % EG, and about 14.5 mole % CW 2000, and has an I.V. of about 0.34.

In these polymers containing the Carbowax material, the n value is preferably between about 6 and 150.

Inks prepared from these polyesters (B), (C) and (D) as for (A) show printing improvements for a variety of end uses.

The invention has been described in detail with particular reference to preferred embodiments thereof, but it will be understood that variations and modifications can be effected within the spirit and scope of the invention.

**Claims**

1. A composition useful as a printing ink or useful for the preparation of a printing ink, comprising a substantially homogeneous system of the components :
   (1) from 4 to 80 weight % of polymeric material of at least one linear, water-dissipatable polymer having carbonyloxy linking groups in the linear molecular structure wherein up to 80 % of the linking groups may be carbonylamido linking groups, the polymer having an inherent viscosity of from 0.28 to 0.38 measured in a 60/40 parts by weight solution of phenol/tetrachloroethane at 25 °C and at a concentration of 0.25 gram of polymer in 100 ml of the solvent, the polymer containing substantially equimolar proportions of acid equivalents (100 mole percent) to hydroxy and amino equivalents (100 mole percent), the polymer comprising the reaction products of (a), (b), (c) and (d) from the following reactants or ester forming or esteramide forming derivatives thereof : (a) an acid moiety of from 75 to 84 mole % isophthalic acid and (b) conversely from 25 to 16 mole % 5-sodiosulfoisophthalic acid, and (c) a glycol moiety of from 45 to 60 mole % diethylene glycol and (d) conversely from 55 to 40 mole % 1,4-cyclohexanedimethanol or ethylene glycol or mixtures thereof ;
   (2) from 1 to 60 weight % of pigment material ;
   (3) from substantially none to 90 weight % of water ; and
   (4) from 0.005 to 30.0 weight % of polyvinyl alcohol selected among 85 % to 95 % hydrolyzed polyvinyl acetate having a viscosity CPS determined on 4 % aqueous solutions at 20 °C by ASTMD-2196 of from 15 to 55 CPS.

2. The composition according to claim 1 wherein said acid moiety comprises from 80 to 83 mole %

isophthalic acid and conversely from 20 to 17 mole % 5-sodiosulfoisophthalic acid, and said glycol moiety comprises from 52 to 56 mole % diethylene glycol and conversely from 48 to 44 mole % 1,4-cyclohexanedimethanol.

**3.** The composition according to claim 2 wherein the weight ratio of water to polyvinyl alcohol is from 85 to 180.

**4.** The composition according to any one of claims 1-3 wherein the pigment is one or a mixture of the following color index materials : C.I. Pigment Yellow 17 ; C.I. Pigment Blue 27 ; C.I. Pigment Red 49:2 ; C.I. Pigment Red 81:1 ; C.I. Pigment Red 81:3 ; C.I. Pigment Red 81:x ; C.I. Pigment Yellow 83 ; C.I. Pigment Red 57:1 ; C.I. Pigment Red 49:1 ; C.I. Pigment Violet 23 ; C.I. Pigment Green 7 ; C.I. Pigment Blue 61 ; C.I. Pigment Red 48:1 ; C.I. Pigment Red 52:1 ; C.I. Pigment Violet 1 ; C.I. Pigment White 6 ; C.I. Pigment Blue 15 ; C.I. Pigment Yellow 12 ; C.I. Pigment Blue 56 ; C.I. Pigment Orange 5 ; C.I. Pigment Black 7 ; C.I. Pigment Yellow 14 ; C.I. Pigment Red 48:2 ; and C.I. Pigment Blue 15:3.

**5.** The composition of claim 4 wherein the polymeric material comprises from 4 to 30 weight %, the pigment material comprises from 1 to 20 weight %, the water comprises from 55 to 90 weight %, and the polyvinyl alcohol comprises from 0.01 to 10.0 weight %.

**6.** The composition of claim 5 wherein the polymeric material comprises from 10 to 25 weight %, the pigment material comprises from 8 to 15 weight %, the water comprises from 65 to 75 weight %, and the polyvinyl alcohol comprises from 0.05 to 3.5 weight %.

**7.** The composition of claim 6 wherein the polyvinyl alcohol comprises from 0.2 to 2.0 weight %.

**8.** The composition of any of claims 4 to 7 coated onto a substrate selected from metal foil, newsprint, bleached and unbleached Kraft paper, clay coated paper, glass, calendered paper, stainless paper, paper board, and films or other substrates of polyester, polycarbonate, cellulose ester, regenerated cellulose, poly(vinylidiene chloride), polyamide, polyolefin, or polystyrene.

**9.** A substantially water-insoluble coating or print on a substrate according to claim 8 wherein substantially all water has evaporated and a substantial portion of the initial metal cations of the water solubilizing sulfonate groups of the polymeric material has been replaced with an in-solubilizing cation.

**10.** The method for preparing the aqueous composition of claim 1 comprising the steps of :

(a) dispersing said polymeric material in water ;

(b) adding said polyvinyl alcohol to the dispersion of (a) with agitation to obtain a substantially homogeneous mixture ;

(c) adding said pigment to the mixture of (b) with agitation to form a pre-dispersion blend ; and

(d) grinding the blend of (c) to reduce the pigment particle size to less than 6.0 on the NPIRI scale.

## Revendications

**1.** Composition utile comme encre ou pour la préparation d'encres comprenant un système pratiquement homogène des composants suivants :

(1) de 4 à 80 % en poids d'une substance polymère constituée d'au moins un polymère linéaire dispersible dans l'eau ayant des groupes de liaison carbonyloxy dans sa structure moléculaire linéaire dans lequel jusqu'à 80 % des groupes de liaison peuvent être des groupes de liaison carbonylamido, polymère ayant une viscosité inhérente comprise entre 0,28 et 0,38 mesurée dans une solution comprenant 60 parts en poids de phénol pour 40 parts en poids de tétrachloroéthane à 25 °C et à une concentration de 0,25 g de polymère pour 100 ml de solvant, polymère contenant des proportions équimolaires de motifs acides (100 moles pour cent) et de motifs hydroxy et amino (100 moles pour cent), polymère comprenant les produits de réaction des réactifs (a), (b), (c) et (d) suivants, ou de dérivés esters ou estéramides de ces réactifs : (a) une portion acide comprenant 75 à 84 % en moles d'acide isophtalique et (b) inversement de 25 à 16 % en moles d'acide 5-sodiosulfoisophtalique, et (c) une portion glycol comprenant de 45 à 60 % en moles de diéthylène glycol et inversement de 55 à 40 % en moles de 1,4-cyclohexanediméthanol ou d'éthylène glycol ou des mélanges de ce derniers,

(2) de 1 à 60 % en poids de pigment ;
(3) de pratiquement 0 à 90 % en poids d'eau ; et
(4) de 0,005 à 30,0 % en poids d'alcool polyvinylique choisi parmi les acétates de polyvinyle hydrolysés à 85-95 % ayant une viscosité CTP mesurée dans une solution aqueuse à 4 % de 15 à 55 CPS NORME ASTMD-2196.

**2.** Composition selon la revendication 1, dans laquelle la position acide comprend de 80 à 83 moles % d'acide isophtalique et inversement de 20 à 17 % en moles d'acide 5-sodiosulfoisophtalique et la portion glycol comprend de 52 à 56 % en moles de diéthylène glycol et inversement de 48 à 44 % en moles de 1,4-cyclohexanediméthanol.

**3.** Composition selon la revendication 1, dans laquelle le rapport en poids eau/alcool vinylique est compris entre 85 et 180.

**4.** Composition selon l'une quelconque des revendications 1 à 3 dans laquelle le pigment est un ou un mélange des substances colorantes suivantes : C.I. Pigment jaune 17; C.I. Pigment bleu 27; C.I. Pigment rouge 49:2; C.I. Pigment rouge 81:1; C.I. Pigment rouge 81:3; C.I. Pigment rouge 81:x; C.I. Pigment jaune 83; C.I. Pigment rouge 57:1; C.I. Pigment rouge 49:1; C.I. Pigment violet 23; C.I. Pigment vert 7; C.I. Pigment bleu 61; C.I. Pigment rouge 48:1; C.I. Pigment rouge 52:1; C.I. Pigment violet 1; C.I. Pigment blanc 6; C.I. Pigment bleu 15; C.I. Pigment jaune 12; C.I. Pigment bleu 56; C.I. Pigment orange 5; C.I. Pigment noir 7; C.I. Pigment jaune 14; C.I. Pigment rouge 48:2: et C.I. Pigment bleu 15:3.

**5.** Composition selon la revendication 4 comprenant de 4 à 30 % en poids de substance polymère, 1 à 20 % en poids de pigment, 55 à 90 % en poids d'eau et de 0,01 à 10,0 % en poids d'alcool polyvinylique.

**6.** Composition selon la revendication 5 comprenant de 10 à 25 % en poids de substance polymère, 8 à 15 % en poids de pigment, 65 à 75 % en poids d'eau et 0,05 à 3,5 % en poids d'alcool polyvinylique.

**7.** Composition selon la revendication 6 comprenant de 0,2 à 2,0 % en poids d'alcool polyvinylique.

**8.** Composition selon l'une quelconque des revendications 4 à 7, appliquée sur un substrat choisi parmi une feuille métallique, du papier journal, du papier kraft blanchi ou non, du papier au kaolin, du verre, du papier satiné, du papier immaculé, du papier épais (paperboard), et des films ou autres substrats de polyester, polycarbonate, ester de cellulose, cellulose régénérée, polychlorure de vinylidène, polyamide, polyoléfine ou polystyrène.

**9.** Impression ou couche appliquée sur un substrat pratiquement insoluble dans l'eau selon la revendication 8, dans laquelle pratiquement toute l'eau est évaporée et une proportion importante des cations métalliques des groupes sulfonates solubilisants dans l'eau de la substance polymère, a été remplacée par un cation insolubilisant.

**10.** Procédé de préparation de la composition selon la revendication 1, comprenant les étapes suivantes:
(a) on disperse la substance polymère dans de l'eau ;
(b) on ajoute l'alcool polyvinylique à la dispersion de (a) sous agitation pour obtenir un mélange pratiquement homogène ;
(c) on ajoute le pigment au mélange (b) sous agitation pour former un mélange prédispersé ; et
(d) on broie le mélange obtenu en (c) pour réduire la taille du pigment à moins de 6,0 sur l'échelle NPIRI.

**Patentansprüche**

**1.** Als Druckfarbe oder zur Herstellung einer Druckfarbe geeignete Zusammensetzung mit einem praktisch homogenen System der Komponenten mit:
(1) 4 bis 80 Gew.-% polymerem Material aus mindestens einem linearen, in Wasser verteilbaren Polymeren mit Carbonyloxy-Bindegruppen in der linearen Molekularstruktur, worin bis zu 80 % der Bindegruppen Carbonylamido-Bindegruppen sein können, wobei das Polymer eine Inherent-Viskosität von 0,28 bis 0,38, gemessen in einer Lösung aus Phenol/Tetrachlorethan im Gewichtsverhältnis 60/40 bei 25°C und einer Konzentration von 0,25 g Polymer in 100 ml des Lösungsmittels aufweist, das Polymer praktisch äquimolare Anteile von Säure-Äquivalenten (100 Mol-%) zu Hydroxy- und Amino-Äquivalenten (100 Mol-%) aufweist und das Polymer aus den Reaktionsprodukten von (a), (b), (c) und (d) der folgenden Reaktionskomponenten oder Ester- oder Esteramid bildenden Derivaten hiervon aufgebaut ist: (a) einem Säurerest aus 75 bis 84 Mol-% Isophthalsäure und (b) 25 bis 16 Mol-% 5-Sulfoisophthalsäure, Natriumsalz, und (c) einem Glykolrest aus 45 bis 60 Mol-% Diethylenglycol und (d) 55 bis 40 Mol-% 1,4-Cyclohexandimethanol oder Ethylenglycol oder Mischungen hiervon;
(2) 1 bis 60 Gew.-% Pigmentmaterial;
(3) von praktisch Null bis 90 Gew.-% Wasser und
(4) 0,005 bis 30,0 Polyvinylalkohol mit 85 bis 95 % hydrolysiertem Polyvinylacetat mit einer Viskosität CPS, bestimmt mit 4 %igen wäßrigen Lösungen bei 20°C nach ASTMD-2196 von 15 bis 55 CPS.

**2.** Zusammensetzung nach Anspruch 1, in der der Säurerest 80 bis 83 Mol-% Isophthalsäure und 20 bis 17 Mol-% Sulfoisophthalsäure, Natriumsalz und der Glycolrest 52 bis 56 Mol-% Diethylenglykol und 48 bis 44 Mol-% 1,4-Cyclohexandimethanol umfaßt.

**3.** Zusammensetzung nach Anspruch 2, in der das Gew.-Verhältnis von Wasser zu Polyvinylalkohol bei 85 bis 180 liegt.

**4.** Zusammensetzung nach einem der Ansprüche 1-3, in der das Pigment eines der folgenden Color-Index-Materialien oder eine Mischung aus solchen Materialien ist: C.I. Pigment Yellow 17; C.I. Pigment Blue 27; C.I. Pigment Red 49:2; C.I. Pigment Red 81:1; C.I. Pigment Red 81:3; C.I. Pigment Red 81:x; C.I. Pigment Yellow 83; C.I. Pigment Red 57:1; C.I. Pigment Red 49:1; C.I. Pigment Violet 23; C.I. Pigment Green 7; C.I. Pigment Blue 61; C.I. Pigment Red 48:1; C.I. Pigment Red 52:1; C.I. Pigment Violet 1; C.I. Pigment White 6; C.I. Pigment Blue 15; C.I. Pigment Yellow 12; C.I. Pigment Blue 56; C.I. Pigment Orange 5; C.I. Pigment Black 7; C.I. Pigment Yellow 14; C.I. Pigment Red 48:2; und C.I. Pigment 15:3.

**5.** Zusammensetzung nach Anspruch 4, in der das polymere Material 4 bis 30 Gew.-%, das Pigmentmaterial 1 bis 20 Gew.-%, das Wasser 55 bis 90 Gew.-% und der Polyvinylalkohol 0,01 bis 10,0 Gew.-% ausmacht.

**6.** Zusammensetzung nach Anspruch 5, in der das polymere Material 10 bis 25 Gew.-%, das Pigmentmaterial 8 bis 15 Gew.-%, das Wasser 65 bis 75 Gew.-% und der Polyvinylalkohol 0,05 bis 3,5 Gew.-% ausmacht.

**7.** Zusammensetzung nach Anspruch 6, in der der Polyvinylalkohol 0,2 bis 2,0 Gew.-% ausmacht.

**8.** Zusammensetzung nach einem der Ansprüche 4 bis 7, aufgetragen auf ein Substrat, ausgewählt aus einer Metallfolie, Zeitungspapier, gebleichtem oder ungebleichtem Kraftpapier, mit Ton beschichtetem Papier, Glas, kalandriertem Papier, fleckenfreiem Papier, Karton, und Folien oder anderen Substraten aus Polyestern, Polycarbonaten, Celluloseestern, regenerierter Cellulose, Poly(vinylidenchlorid), Polyamid, Polyolefin oder Polystyrol.

**9.** In Wasser praktisch unlösliche Beschichtung oder Druck auf einem Substrat nach Anspruch 8, aus dem praktisch sämtliches Wasser verdampft ist und bei dem ein weentlicher Anteil der ursprünglich vorhandenen Metallkationen der wasserlöslich machenden Sulfonatgruppen des polymeren Materials durch unlöslichmachende Kationen ersetzt sind.

**10.** Verfahren zur Herstellung der wäßrigen Zusammensetzung nach Anspruch 1, mit den Stufen:
(a) Dispergieren des polymeren Materials in Wasser;
(b) Zusetzen des Polyvinylalkohols zur Dispersion von (a) unter Bewegung zwecks Erzielung einer praktisch homogenen Mischung;
(c) Zusetzen des Pigments zur Mischung (b) unter Bewegung zwecks Erzielung einer Vor-Dispersionsmischung; und

(d) Vermahlen der Mischung (c) zwecks Verminderung der Pigmentteilchengröße auf weniger als 6,0 auf der NPIRI-Skala.